# EUROPÄISCHE PATENTSCHRIFT

(11) **EP 0 736 709 B1**
(45) Veröffentlichungstag und Bekanntmachung des Hinweises auf die Patenterteilung: **12.04.2000**
(21) Anmeldenummer: 96104758.6
(22) Anmeldetag: 26.03.1996
(51) Int. Cl.: F16J 15/08

(54) **Metallische Zylinderkopfdichtung**
Metallic cylinder head gasket
Joint de culasse métallique

(30) Priorität: 08.04.1995 DE 19513360; 08.04.1995 DE 19513361; 08.05.1995 DE 19513362
(43) Veröffentlichungstag der Anmeldung: 09.10.1996
(60) Teilanmeldung: 99114922.0
(73) Patentinhaber: Elring Klinger GmbH, 72581 Dettingen (DE)
(72) Erfinder: Dickhaut-Koop, Reinhardt, Dr.rer.nat. Dipl.-Ing., 65510 Idstein (DE); Eckert, Dieter, 73207 Plochingen (DE); Werz, Ulrich, 72581 Dettingen (DE); Diez, Armin, 73252 Lenningen-Gutenberg (DE); Böhringer, Peter, 72584 Hülben (DE)
(74) Vertreter: Sparing - Röhl - Henseler Patentanwälte

(56) Entgegenhaltungen:
- EP-A- 0 544 215
- EP-A- 0 633 396
- GB-A- 2 097 871
- US-A- 5 211 408

## Beschreibung

Die Erfindung betrifft eine metallische Zylinderkopfdichtung, mit wenigstens einem Deckblech und einem Trägerblech, die übereinander angeordnet sind und die mit Schraubendurchtrittslöchern und mit einer Öffnung oder mit mehreren nebeneinander angeordneten Öffnungen entsprechend den Brennkammern der Brennkraftmaschine versehen sind, wobei in dem wenigstens einen Deckblech um jede Öffnung herum mit Abstand zu dieser unter Belassung eines geraden Blechabschnitts im Öffnungsrandbereich eine zum Trägerblech weisende Sicke vorgesehen ist, für deren Schutz benachbart zu dieser um jede Öffnung herum verlaufend ein innerer Verformungsbegrenzer vorgesehen ist, auf dem das wenigstens eine Deckblech im eingespannten Zustand der Dichtung aufliegt.

Aus der EP 0 306 766 C1 bzw. der EP 0 230 804 C1 ist eine derartige metallische Zylinderkopfdichtung für eine Brennkraftmaschine bekannt, bei der ein Trägerblech zusammen mit mindestens einem gesickten Deckblech als Funktionsblech vorgesehen sind.

Auch aus EP-A-0 633 396 ist eine derartige metallische Zylinderkopfdichtung bekannt, die zwei gesickte Deckbleche aufweist, deren Sicken mit Abstand zur Brennkammeröffnung angeordnet sind. Zwischen den gesickten Deckblechen befindet sich ein Trägerblech mit einem inneren, sich entlang der Brennkammeröffnung erstreckenden Verformungsbegrenzer für die Sicke, auf dem der brennkammerseitige Rand der Deckbleche beim Einspannen der Dichtung zur Anlage gelangt.

Da sich der Dichtspalt zwischen Zylinderkopf und -block einer Brennkraftmaschine im Betrieb in Abhängigkeit vom Arbeitstakt des jeweils betrachteten Zylinders ändert, ist die Dichtung ständigen Pressungsänderungen unterworfen und muß zur Aufrechterhaltung einer einwandfreien Abdichtung dauerhafte Federungseigenschaften aufweisen.

Die Abdichtung wird hierbei durch eine Überhöhung der Zylinderkopfdichtung entlang des Brennraums und durch eine dahinter liegende Sicke vorgenommen. Letztere wirkt als Federelement und folgt infolge des Zünddrucks auftretenden vertikalen Relativbewegungen des Zylinderkopfs gegenüber dem Zylinderblock. Einerseits darf bei maximal belasteter Sikke keine unzulässig große Verformung auftreten, andererseits darf die Entlastung nicht vollständig, sondern nur soweit erfolgen, daß eine Mindestverformung beim höchsten auftretenden Brennraumdruck die erforderliche Abdichtung sicherstellt. Zwischen diesen beiden Eckpunkten der Verformung liegt der Arbeitsbereich der Sicke.

Um die Funktion der Sicke sicherzustellen, darf die Sicke also weder beim Einbau der Dichtung, noch im Betriebszustand vollständig verformt werden. Eine unzulässig große Verformung der Sicke vertikal zur Dichtungsebene wird bei den bekannten Dichtungen durch einen Verformungsbegrenzer gleichbleibender Stärke verhindert, der zugleich zur Überhöhung der Dichtung entlang des Brennraums dient.

Aufgabe der Erfindung ist es, eine metallische Zylinderkopfdichtung der eingangs genannten Art zu schaffen, bei der der Sicke eine erhöhte Federkraft verliehen wird.

Diese Aufgabe wird entsprechend dem kennzeichnenden Teil des Anspruchs 1 dadurch gelöst, daß der innere Verformungsbegrenzer zusätzlich zur Auflagefläche für das wenigstens eine Deckblech einen Anschlag für das wenigstens eine Deckblech im eingespannten Zustand der Dichtung aufweist.

Dadurch, daß der innere Verformungsbegrenzer einen Anschlag für das oder die Deckbleche im eingespannten Zustand der Dichtung aufweist und die Deckbleche einen radialen Abstand bzw. überstand gegenüber dem Anschlag haben, stoßen ab einer bestimmten Höhenverformung der Sicke und damit einer bestimmten Längenänderung der Deckbleche diese an den Anschlag an. Hierdurch geht eine weitere Einfederung der Sicke nicht mehr mit einer Längenänderung der Deckbleche einher, so daß sich eine Art Froschfedereffekt ergibt und zur weiteren Verformung der Sicke bis zu ihrer Auflage auf dem Verformungsbegrenzer ein erheblich höherer Kraftaufwand erforderlich ist. Auf diese Weise wird eine höhere Federkraft der Sicke erreicht, wobei der Maximalwert letztlich von der Auflage auf dem Verformungsbegrenzer und dessen Höhenprofilierung abhängt.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 zeigt schematisch und ausschnittweise eine Draufsicht auf eine Zylinderkopfdichtung.

Fig. 2 zeigt ausschnittweise einen Schnitt längs der Linie I-I von Fig. 1.

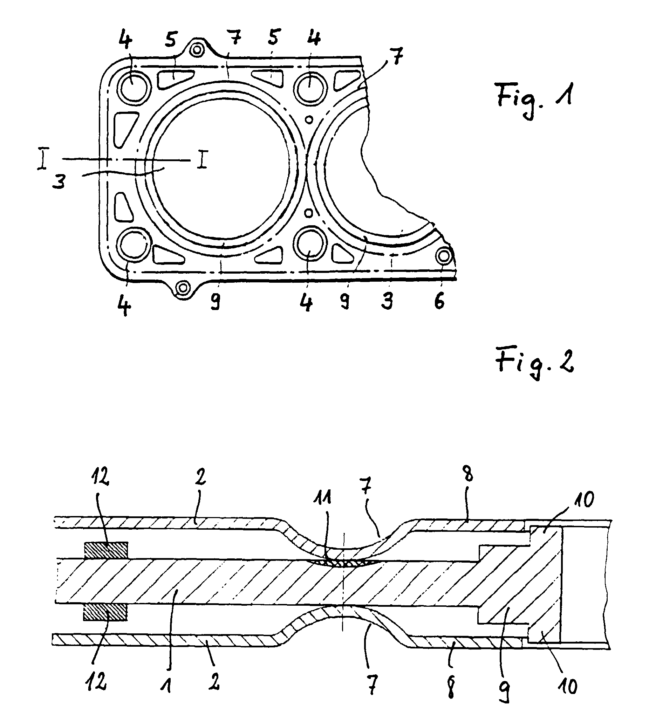

Die in Fig. 1 und 2 dargestellte Zylinderkopfdichtung umfaßt ein Trägerblech 1, auf dessen beiden Seiten jeweils ein Deckblech 2 angeordnet ist. Die Dichtung, d.h. Trägerblech 1 und Deckbleche 2, weist eine Reihe von öffnungen 3 entsprechend den Brennräumen der zugehörigen Brennkaftmaschine sowie Schraubendurchtrittslöcher 4 für Schrauben, die zum Verspannen von Zylinderkopf und -block verwendet werden, sowie weiterhin Durchtrittsöffnungen 5, 6 für Kühlwasser bzw. Öl auf.

Die gewöhnlich aus Federstahl hergestellten und ansonsten planen Deckbleche 2 sind mit Sicken 7 versehen, die mit Abstand unter Belassung eines geraden Blechabschnitts 8 im Randbereich der Öffnung 3 angeordnet und zum Trägerblech 1 gerichtet sind.

Ferner sind üblicherweise um die Durchtrittsöffnungen 5, 6 und die Schraubendurchtrittslöcher 4 herum nicht dargestellte Halbsicken in den Deckblechen vorgesehen.

Das ansonsten plane Trägerblech 1 ist im Randbereich der öffnungen 3 jeweils mit einem inneren Verformungsbegrenzer 9 für die benachbarte Sicke 7 versehen. Gemäß Fig. 2 ist bei diesem Ausführungsbeispiel der Verformungsbegrenzer 9 dadurch einen im Schnitt rechteckigen Abschnitt gebildet, wobei der Verformungsbegrenzer 9 praktisch mittig zwischen den Deckblechen 2 angeordnet und somit bezüglich der Sicken 7 beider Deckbleche 2 gleichwirkend ist.

Die Stärke des Verformungsbegrenzers 9 ist derart bemessen, daß die geraden Blechabschnitte 8 der Deckbleche 2 beim Einspannen der Dichtung auf diesem zum Aufstand kommen, während gleichzeitig die Sicken 7 auf Pressung beansprucht werden. Der Verformungsbegrenzer 9 legt die Eckpunkte des Sickenarbeitsbereichs entsprechend den vorgegebenen Betriebspunkten fest, wobei zur Anpassung hiervon an vorgegebene Auslegungspunkte eine Variation der Höhen- und/oder Breitenprofilierung des Verformungsbegrenzers 9 entlang des Umfangs der Öffnung 3 vorgesehen sein kann. Die Höhenprofilierung kann durch entsprechende Bearbeitung des Verformungsbegrenzers 9 erfolgen. Die Breitenprofilierung kann bei dieser Ausführungsform durch Anbringen eines entsprechenden Ausschnitts für die Öffnung 3 erfolgen.

Im Bereich benachbart zu den Schraubendurchtrittslöchern 4 ist bei einer Höhenprofilierung die Höhe des Verformungsbegrenzers 9 niedriger als in den Zwischenschraubenbereichen und bei einer Breitenprofilierung ist die Breite des Verformungsbegrenzers 9 im Bereich benachbart zu den Schraubendurchtrittslöchern 4 geringer als in den Zwischenschraubenbereichen.

Anstatt die Breite des Verformungsbegrenzers 9 unmittelbar zu variieren, kann auch der Auflagebereich der Deckbleche 2 durch einen entsprechend unrunden Ausschnitt für die Öffnung 3 variiert werden.

Der Verformungsbegrenzer 9 ist zusätzlich durch Ausbildung einer Stufe mit einem Anschlag 10 versehen, der ebenfalls in variabler Weise höhen- und/oder breitenprofiliert sein kann. Die Deckbleche 2 haben einen radialen Abstand bzw. überstand gegenüber dem Anschlag 10, so daß ab einer bestimmten Höhenverformung der Sicke 7 und damit einer bestimmten Längenänderung der Deckbleche 2 diese an den Anschlag 10 anstoßen. Hierdurch geht eine weitere Einfederung der Sicke 7 nicht mehr mit einer Längenänderung der Deckbleche 2 einher, so daß zur weiteren Verformung der Sicke 7 bis zu ihrer Auflage auf dem Verformungsbegrenzer 9 ein erheblich höherer Kraftaufwand erforderlich ist. Auf diese Weise wird eine höhere Federkraft der Sicke erreicht, wobei der Maximalwert letztlich von der Auflage auf dem Verformungsbegrenzer 9 und dessen Höhenprofilierung abhängt.

Für die Sicke 7 kann zusätzlich ein weiterer, äußerer Verformungsbegrenzer 12 vorgesehen sein, der konzentrisch zu dem Vorformungsbegrenzer 9, jedoch auf der diesem abgekehrten Seite der Sicke 7, d.h. auf der brennraumabgekehrten Seite der Sicke 7 angeordnet ist. Infolge des Zusammenwirkens beider Verformungsbegrenzer 9, 12 läßt sich erreichen, daß die Einfederung der Sicke 7 praktisch senkrecht zur Dichtungsebene erfolgt.

Auch der Verformungsbegrenzer 12, der entweder an dem zugehörigen Deckblech 2 oder insbesondere am Trägerblech beispielweise durch Kleben oder Schweißen befestigt ist, kann ebenfalls in variabler Weise höhen- und/ oder breitenprofiliert sein. Da der Verformungsbegrenzer 12 weiter außen liegt, sind die Kräfteverhältnisse nicht mit denen im Bereich des inneren Verformungsbegrenzers 9 identisch, dementsprechend kann die Variation der Höhen- und/ oder Breitenprofilierung unterschiedlich sein.

Wie aus Fig. 2 ersichtlich, kann das Trägerblech 1 im Aufstandsbereich der Sicken 7 zusätzlich zur Anpassung der Eckpunkte des Sickenarbeitsbereichs an konstruktiv vorgegebene Auslegungspunkte in seinem Niveau variiert sein. Dies kann durch eine über den Brennraumumfang unterschiedliche Vertiefung 11 (Prägung) und/oder eine Erhöhung (Auftragung) des betreffenden Trägerblechabschnitts geschehen.

Der Verformungsbegrenzer 9 kann auch vom Trägerblech 1 getrennt ausgebildet und gegebenenfalls mit diesem verschweißt sein.

## Patentansprüche

1. Metallische Zylinderkopfdichtung für eine Brennkraftmaschine, mit wenigstens einem Deckblech (2) und einem Trägerblech (1), die übereinander angeordnet sind und die mit Schraubendurchtrittslöchern (4) und mit einer Öffnung (3) oder mit mehreren nebeneinander angeordneten Öffnungen (3) entsprechend den Brennkammern der Brennkraftmaschine versehen sind, wobei in dem wenigstens einen Deckblech (2) um jede Öffnung (3) herum mit Abstand zu dieser unter Belassung eines geraden Blechabschnitts (8) im Öffnungsrandbereich eine zum Trägerblech (1) weisende Sicke (7) vorgesehen ist, für deren Schutz benachbart zu dieser um jede Öffnung (3) herum verlaufend ein innerer Verformungsbegrenzer (9) vorgesehen ist, auf dem das wenigstens eine Deckblech (2) im eingespannten Zustand der Dichtung aufliegt, dadurch **gekennzeichnet,** daß der innere Verformungsbegrenzer (9) zusätzlich zur Auflagefläche für das wenigstens eine Deckblech (2) einen Anschlag (10) für das wenigstens eine Deckblech (2) im eingespannten Zustand der Dichtung aufweist.

2. Dichtung nach Anspruch 1, dadurch gekennzeichnet, daß der innere Verformungsbegrenzer (9) im Schnitt etwa rechteckig ist.

3. Dichtung nach Anspruch 1 oder 2, dadurch gekennzeichnet, daß auf jeder Seite des Trägerblechs (1), auf der sich ein Deckblech (2) befindet, auf der der jeweiligen Öffnung (3) abgewandten Seite der Sicke (7) ein äußerer Verformungsbegrenzer (12) konzentrisch zum inneren Verformungsbegrenzer (9) für die benachbarte Sicke (7) vorgesehen ist.

4. Dichtung nach Anspruch 3, dadurch gekennzeichnet, daß der äußere Verformungsbegrenzer (12) entsprechend einer gleichmäßigen Kraftverteilung im Öffnungsrandbereich in Umfangsrichtung höhen- und/oder breitenveränderlich ist.

5. Dichtung nach einem der Ansprüche 1 bis 4, dadurch gekennzeichnet, daß der innere Verformungsbegrenzer (9) entsprechend einer gleichmäßigen Kraftverteilung im Öffnungsrandbereich in Umfangsrichtung höhen- und/oder breitenveränderlich ist.

6. Dichtung nach einem der Ansprüche 1 bis 5, dadurch gekennzeichnet, daß eine sich in Umfangsrichtung des Sikkenaufstandsbereichs erstreckende, Vertiefungen (11) und/oder Erhöhungen aufweisende Profiländerung des Trägerblechs (1) vorgesehen ist.

7. Dichtung nach einem der Ansprüche 1 bis 6, dadurch gekennzeichnet, daß das Trägerblech (1) zwischen zwei gesickten Deckblechen (2) angeordnet ist und der innere Verformungsbegrenzer (9) etwa mittig zwischen beiden Deckblechen (2) angeordnet ist.

## Claims

1. Metallic cylinder head gasket for an internal combustion engine, with at least one cover plate (2) and a carrier plate (1), which are arranged one above the other and which are provided with holes (4) for the passage of screws and with an opening (3) or with several openings (3) arranged one beside the other, corresponding to the combustion chambers of the internal combustion engine, in which case provided in the at least one cover plate (2), around each opening (3), at a distance therefrom leaving a straight sheet section (8) in the edge region of the opening is a corrugation (7) pointing towards the carrier plate (1), provided for the protection of which, adjacent thereto, and extending around each opening (3) is an inner deformation limiter (9), on which the at least one cover plate (2) rests in the clamped state of the gasket, characterised in that in addition to the bearing surface for the at least one cover plate (2), the inner deformation limiter (9) comprises a stop (10) for the at least one cover plate (2) in the clamped state of the gasket.

2. Gasket according to Claim 1, characterised in that the inner deformation limiter (9) is approximately rectangular in cross-section.

3. Gasket according to Claim 1 or 2, characterised in that on each side of the carrier plate (1), on which a cover plate (2) is located, on the side of the corrugation (7) remote from the respective opening (3), an outer deformation limiter (12) is provided concentric with the inner deformation limiter (9) for the adjacent corrugation (7).

4. Gasket according to Claim 3, characterised in that the outer deformation limiter (12) is variable as regards height and/or width corresponding to a uniform force distribution in the edge region of the opening in the peripheral direction.

5. Gasket according to one of Claims 1 to 4, characterised in that the inner deformation limiter (9) is variable as regards height and/or width corresponding to a uniform force distribution in the edge region of the opening in the peripheral direction.

6. Gasket according to one of Claims 1 to 5, characterised in that a profile variation of the carrier plate (1) is provided, extending in the peripheral direction of the standing-up region of the corrugation and comprising recesses (11) and/or elevations.

7. Gasket according to one of Claims 1 to 6, characterised in that the carrier plate (1) is located between two corrugated cover plates (2) and the inner deformation limiter (9) is located approximately centrally between both cover plates (2).

## Revendications

1. Joint de culasse métallique pour un moteur à combustion interne, comprenant au moins une tôle de recouvrement (2) et une tôle porteuse (1) qui sont disposées l'une au-dessus de l'autre et qui sont munies de trous de passage de vis (4) et d'un trou (3) ou de plusieurs trous (3) disposés l'un à côté de l'autre en correspondance avec les chambres de combustion du moteur à combustion interne, dans lequel, dans ladite tôle de recouvrement (2), est prévue autour de chaque trou (3), à une certaine distance de celui-ci et en laissant subsister un segment de tôle rectiligne (8) dans la région du pourtour du trou, une nervure (7) en direction de la tôle porteuse (1), pour la protection de laquelle il est prévu à côté de celle-ci, un limiteur de déformation intérieur (9) s'étendant sur tout le pourtour de chaque trou (3), et sur lequel ladite tôle de recouvrement (2) repose, le joint étant serré, caractérisé en ce que le limiteur de déformation intérieur (9) présente, en supplément de la surface de portée pour tôle de recouvrement (2), une butée (10) pour la tôle de recouvrement (2) à l'état serré du joint.

2. Joint de culasse selon la revendication 1, caractérisé en ce que le limiteur de déformation intérieur (9) est sensiblement rectangulaire en coupe.

3. Joint de culasse selon la revendication 1 ou 2, caractérisé en ce que, sur chaque face de la tôle porteuse (1) sur laquelle se trouve une tôle de recouvrement (2), et du côté de la nervure (7) qui est opposé au trou (3) considéré, un limiteur de déformation extérieur (12) est prévu concentriquement au limiteur de déformation intérieur (9) pour la nervure (7) adjacente.

4. Joint de culasse selon la revendication 3, caractérisé en ce que le limiteur de déformation extérieur (12) est variable en hauteur et/ou en largeur dans la direction circonférentielle, pour obtenir une répartition uniforme des forces dans la région du pourtour du trou.

5. Joint de culasse selon une des revendications 1 à 4, caractérisé en ce que le limiteur de déformation intérieur (9) est variable en hauteur et/ou en largeur dans la direction circonférentielle, pour obtenir une répartition uniforme des forces dans la région du pourtour du trou.

6. Joint de culasse selon une des revendications 1 à 5, caractérisé en ce qu'il est prévu une variation de profil de la tôle porteuse (1) s'étendant dans la direction circonférentielle de la région de contact avec la nervure, et présentant des creusements (11) et/ou des surélévations.

7. Joint de culasse selon une des revendications 1 à 6, caractérisé en ce que la tôle porteuse (1) est disposée entre deux tôles de recouvrement nervurées (2) et le limiteur de déformation intérieur (9) est disposé en position sensiblement centrale entre les deux tôles de recouvrement (2).
